# EUROPEAN PATENT APPLICATION

(11) **EP 4 520 581 A1**
(43) Date of publication of application: **12.03.2025**
(21) Application number: 24812051.1
(22) Date of filing: 04.07.2024
(51) Int. Cl.: B60L 53/53, B60L 53/64, G06Q 10/0631, H02J 7/00

(54) **CHARGING CONTROL METHOD AND APPARATUS, AND RELATED DEVICE**

(30) Priority: 07.07.2023 CN 202310828761
(71) Applicant: Shenzhen Ampere Time Digital Energy Technology Co., Ltd., Shenzhen, Guangdong 518100 (CN)
(72) Inventor: LU, Haijun, Shenzhen, Guangdong 518100 (CN); ZHAO, Menglong, Shenzhen, Guangdong 518100 (CN)
(74) Representative: Ipside
(86) International application number: PCT/CN2024/103563
(87) International publication number: WO 2025/011427

(57) **Abstract**

A method for charging control, an apparatus for charging control, and related devices are provided. The method includes the following. A reference charging frequency at which a target vehicle has been charged through the battery pack is acquired in the case where a charging event corresponding to the target vehicle is detected. The target vehicle is charged in a fast-charging mode through the mains-borne control system in the case where the reference charging frequency is determined to be less than or equal to a first preset frequency and a charging port accessed by the target vehicle is detected to be a fast-charging port. A target charging mode is acquired and the target vehicle is charged in the target charging mode in the case where the reference charging frequency of the target vehicle is determined to be greater than the first preset frequency and less than or equal to a second preset frequency. The target vehicle is charged through the battery pack in the case where the reference charging frequency of the target vehicle is determined to be greater than the second preset frequency. The method improves the intelligence and comprehensiveness of charging control of new energy vehicles by a home energy management system, expands the boundaries of energy management functions, and allows for flexible charging of the new energy vehicles.

## Description

### CROSS-REFERENCE TO RELATED APPLICATION(S)

This application claims priority to and the benefit of Chinese Patent Application No. 202310828761.5, filed July 7, 2023 to China National Intellectual Property Administration (CNIPA), and entitled "METHOD AND APPARATUS FOR CHARGING CONTROL AND RELATED DEVICES", the entire disclosure of which is incorporated herein by reference.

### TECHNICAL FIELD

The disclosure relates to the technical field of the new energy industry, and in particular, to a method and apparatus for charging control and related devices.

### BACKGROUND

With the advent of the intelligent and information age, the demand for electricity has significantly increased. To alleviate pressure from environmental pollution, energy consumption, and other aspects, home energy storage systems are gradually entering thousands of households.

In the related art, in households, electrical energy can be supplied to various home appliances via solar photovoltaic panels, and also electrical energy generated by photovoltaic power can be stored into a battery pack by using energy storage technology, so that electrical energy can be supplied by the battery pack when needed. In practical applications, new energy vehicles may also be connected to the home energy storage system to be charged. However, due to the output power limitations of the home energy storage system, generally, the fast-charging demand of new energy vehicles cannot be met. Therefore, when a new energy vehicle is connected to the home energy storage system to be charged, there may be a mismatch between demand and supply, leading to the possibility of charging failure or low charging efficiency, which affects the normal use of the new energy vehicle. Therefore, how to flexibly use the home energy storage system to charge new energy vehicles has become one of the technical problems that need to be solved urgently.

### SUMMARY

Embodiments of the disclosure provide a method and apparatus for charging control and related devices, which improves the intelligence and comprehensiveness of charging control of new energy vehicles by a home energy management system, expands the boundaries of energy management functions, and allows for flexible charging of new energy vehicles.

In a first aspect, the disclose provides a method for charging control. The method is applied to a smart inverter in a home energy management system. The home energy management system includes a mains-borne control system and a home energy storage system. The home energy storage system includes a photovoltaic panel array, the smart inverter, and a battery pack. The smart inverter is connected to the photovoltaic panel array, the battery pack, and the mains-borne control system. The method includes the following. A reference charging frequency at which a target vehicle has been charged through the battery pack is acquired in the case where a charging event corresponding to the target vehicle is detected, where the reference charging frequency indicates a frequency at which the target vehicle has been charged through the battery pack prior to the charging event. The target vehicle is charged in a fast-charging mode through the mains-borne control system in the case where the reference charging frequency is determined to be less than or equal to a first preset frequency and a charging port accessed by the target vehicle is detected to be a fast-charging port, where the first preset frequency is a frequency threshold for users with low sensitivity to charging costs, preset through big data analysis. A fast-charging prompt message is outputted via the terminal device to prompt a user to use the fast-charging port for charging in the case where the charging port accessed by the target vehicle is detected to be a non-fast-charging port. The target vehicle is charged in the fast-charging mode through the mains-borne control system in the case where it is detected that the charging port accessed by the target vehicle has been updated from the non-fast-charging port to the fast-charging port. The target vehicle is charged in a non-fast-charging mode through the mains-borne control system in the case where the charging port accessed by the target vehicle is detected to remain the non-fast-charging port. A target charging mode preferred by the user is acquired via the terminal device in the case where the reference charging frequency of the target vehicle is determined to be greater than the first preset frequency and less than or equal to a second preset frequency, where the second preset frequency is a frequency threshold for users with high sensitivity to charging costs, preset through big data analysis. The target vehicle is charged in the target charging mode. The target vehicle is charged through the battery pack in the case where the reference charging frequency of the target vehicle is determined to be greater than the second preset frequency.

In the embodiments of the disclosure, the smart inverter in the home energy management system may determine a magnitude relationship between the reference charging frequency, at which the target vehicle has been charged through the battery pack, and the first preset frequency, and a magnitude relationship between the reference charging frequency and the second preset frequency, to determine a charging control strategy for charging of the target vehicle. Further, the smart inverter may charge the target vehicle through the battery pack and/or mains-borne control system, improving the intelligence and comprehensiveness of charging control of new energy vehicles by the home energy management system, expanding the boundaries of energy management functions, and allowing for flexible charging of new energy vehicles.

In a second aspect, the disclosure provides an apparatus for charging control. The apparatus for charging control includes a processing unit and a unit for charging control. The processing unit is configured to acquire a reference charging frequency at which a target vehicle has been charged through a battery pack in the case where a charging event corresponding to the target vehicle is detected, where the reference charging frequency indicates a frequency at which the target vehicle has been charged through the battery pack prior to the charging event. The unit for charging control is configured to charge the target vehicle in a fast-charging mode through the mains-borne control system in the case where the reference charging frequency is determined to be less than or equal to a first preset frequency and a charging port accessed by the target vehicle is detected to be a fast-charging port of the target vehicle, where the first preset frequency is a frequency threshold for users with low sensitivity to charging costs, preset through big data analysis. The processing unit is further configured to output a fast-charging prompt message via the terminal device to prompt a user to use the fast-charging port for charging in the case where the charging port accessed by the target vehicle is detected to be a non-fast-charging port. The unit for charging control is further configured to charge the target vehicle in the fast-charging mode through the mains-borne control system in the case where it is detected that the charging port accessed by the target vehicle has been updated from the non-fast-charging port to the fast-charging port. The unit for charging control is further configured to charge the target vehicle in a non-fast-charging mode through the mains-borne control system in the case where the charging port accessed by the target vehicle is detected to remain the non-fast-charging port. The processing unit is further configured to acquire via the terminal device a target charging mode preferred by the user in the case where the reference charging frequency of the target vehicle is determined to be greater than the first preset frequency and less than or equal to a second preset frequency, where the second preset frequency is a frequency threshold for users with high sensitivity to charging costs, preset through big data analysis. The unit for charging control is further configured to charge the target vehicle in the target charging mode. The unit for charging control is further configured to charge the target vehicle through the battery pack in the case where the reference charging frequency of the target vehicle is determined to be greater than the second preset frequency.

In a third aspect, the disclosure provides a computer-readable storage medium storing a computer program which, when executed by a computer, causes the computer to execute the method of any one of embodiments in the first aspect, thereby achieving the beneficial effects of the method for charging control provided in the aspect.

In a fourth aspect, the disclosure provides an electronic device. The electronic device includes a memory and a processor connected to the memory. The memory stores a computer program which, when executed by the processor, causes the processor to execute the method for charging control in the first aspect, thereby achieving the beneficial effects of the method for charging control provided in the aspect.

By implementing the embodiments of the disclosure, the smart inverter in the home energy management system may determine the magnitude relationship between the reference charging frequency, at which the target vehicle has been charged through the battery pack, and the first preset frequency, and the magnitude relationship between the reference charging frequency and the second preset frequency, to determine a charging control strategy for charging of the target vehicle. Further, the smart inverter may charge the target vehicle through the battery pack and/or mains-borne control system, improving the intelligence and comprehensiveness of charging control of new energy vehicles by the home energy management system, expanding the boundaries of energy management functions, and allowing for flexible charging of new energy vehicles.

### BRIEF DESCRIPTION OF THE DRAWINGS

To describe technical solutions in embodiments of the disclosure or the related art more clearly, the following briefly introduces the accompanying drawings required for describing the embodiments or the related art. Apparently, the accompanying drawings in the following description only illustrate some embodiments of the disclosure. Those of ordinary skill in the art may also obtain other drawings based on these accompanying drawings without creative efforts.
FIG. 1 is a schematic structural diagram of a home energy management system provided in embodiments of the disclosure.
FIG. 2 is another schematic structural diagram of a home energy management system provided in embodiments of the disclosure.
FIG. 3 is a flow chart of a method for charging control provided in embodiments of the disclosure.
FIG. 4 is a schematic diagram illustrating an interface displaying a fast-charging prompt message provided in embodiments of the disclosure.
FIG. 5 is a schematic diagram illustrating an interface displaying charging modes provided in embodiments of the disclosure.
FIG. 6 is another schematic diagram illustrating an interface displaying charging modes provided in embodiments of the disclosure.
FIG. 7 is a schematic structural diagram of an apparatus for charging control provided in embodiments of the disclosure.
FIG. 8 is a schematic structural diagram of an electronic device provided in embodiments of the disclosure.

### DETAILED DESCRIPTION

In order to enable those of ordinary skill in the art to better understand the solutions of the disclosure, the technical solutions in embodiments of the disclosure will be clearly and completely described below in conjunction with the accompanying drawings in the embodiments of the disclosure.

In the related art, in households, provide electrical energy can be supplied to various home appliances via solar photovoltaic panels, and also the electrical energy generated by photovoltaic power can be stored into a battery pack by using energy storage technology, so that electrical energy can be supplied by the battery pack when needed. In a home energy storage system in the related art, new energy vehicles may also be connected to the home energy storage system to be charged. However, the output power of the home energy storage system is usually unable to meet the fast charging demand of new energy vehicles, and there may be a mismatch between demand and supply, making it difficult to effectively complete the charging task. Therefore, a technical problem that the disclosure aims to solve is how to flexibly use the home energy storage system to charge the new energy vehicles.

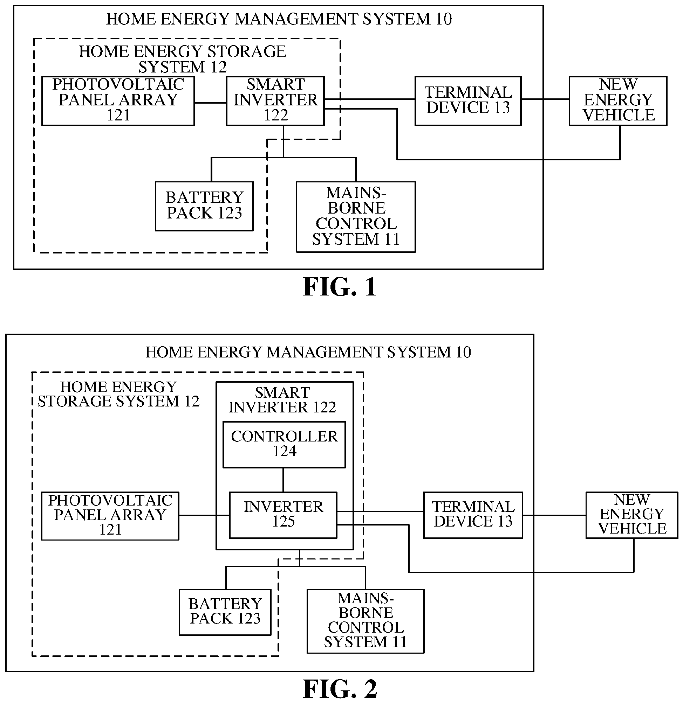

Referring to FIG. 1, FIG. 1 is a schematic structural diagram of a home energy management system provided in embodiments of the disclosure. As illustrated in FIG. 1, the home energy management system 10 may include a mains-borne control system 11, a home energy storage system 12, and a terminal device 13. The home energy storage system 12 may include a photovoltaic panel array 121, a smart inverter 122, and a battery pack 123. The smart inverter 122 may be connected to the photovoltaic panel array 121, the battery pack 123, the mains-borne control system 11, and the terminal device 13. The battery pack 123 may include multiple single batteries that are connected in parallel. The terminal device 13 may be connected to the smart inverter 122.

The smart inverter 122 may be connected to the battery pack 123 in the home energy storage system 12, to charge a new energy vehicle through the battery pack 123. The smart inverter 122 may also be connected to the mains-borne control system 11, to charge a target vehicle through the mains-borne control system 11.

Optionally, the smart inverter 122 may obtain charging data of a charging process in which the new energy vehicle has been charged through the mains-borne control system 11.

Optionally, the smart inverter 122 may establish a communication connection with the home energy storage system 12 to obtain a remaining power of the battery pack 123 in the home energy storage system 12, a historical power supply amount of the battery pack 123 within each period, and charging data of each individual charging process in which the new energy vehicle has been charged through the battery pack 123 in the home energy storage system 12.

Optionally, a user may establish a communication connection with the new energy vehicle through the terminal device 13. The terminal device 13 may obtain and store vehicle-related information of the new energy vehicle such as a remaining power, a power consumption, and a charging data. The smart inverter 122 may obtain the vehicle-related information stored in the terminal device 13 through the terminal device 13, and may also display charging modes to the user through the terminal device 13, as well as send a prompt message to the user.

In the embodiments of the disclosure, the terminal device 13 may be any form of electronic device capable of establishing a communication connection with the new energy vehicle, such as a smartphone, a portable laptop, a desktop computer, a self-service terminal, or a vehicle-mounted terminal. In the disclosure, the implementation form of the terminal device is not specifically limited.

Referring to FIG. 2, FIG. 2 is another schematic structural diagram of the home energy management system provided in embodiments of the disclosure. As illustrated in FIG. 2, the smart inverter 122 may include a controller 124 and an inverter 125.

Optionally, the controller 124 may control the inverter 125 to charge the new energy vehicle through the battery pack 123 and/or the mains-borne control system 11.

Here, the inverter 125 is a converter capable of converting direct current (DC) electrical energy (from a battery or accumulator) into alternating current (AC) with a fixed frequency and voltage or with variable frequency and voltage (typically 220 V, 50 Hz sine wave).

In the embodiments of the disclosure, the controller 124 may be a general-purpose processor, a digital signal processor (DSP), an application-specific integrated circuit (ASIC), a field-programmable gate array (FPGA), or other programmable logic devices, discrete gates or transistor logic devices, or discrete hardware components. The form of the controller 124 is not specifically limited in the embodiments of the disclosure.

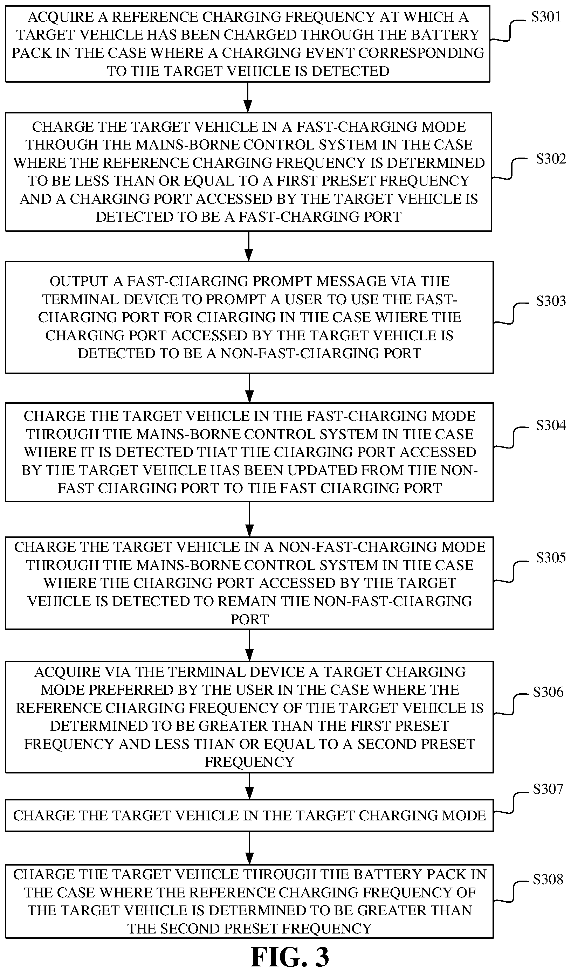

Referring to FIG. 3, FIG. 3 is a flow chart of a method for charging control provided in embodiments of the disclosure. The method for charging control may be applied to the smart inverter 122 of the home energy management system 10 as illustrated in FIG. 1. As illustrated in FIG. 3, the method may include the following.

At S301, a reference charging frequency at which a target vehicle has been charged through the battery pack is acquired in the case where a charging event corresponding to the target vehicle is detected.

In some possible embodiments, the reference charging frequency at which the target vehicle has been charged through the battery pack is acquired in the case where the smart inverter 122 detects the charging event corresponding to the target vehicle. The reference charging frequency indicates a frequency at which the smart inverter 122 has charged the target vehicle using only the battery pack 123 prior to the charging event corresponding to the target vehicle.

In an optional embodiment, the smart inverter 122 may acquire the number of first historical charging times that the target vehicle has been charged within a preset period prior to target charging time at which the charging event occurs, and the number of second historical charging times that the target vehicle has been charged through the battery pack 123 within the preset period prior to the target charging time. Further, the smart inverter 122 may determine the reference charging frequency at which the target vehicle has been charged through the battery pack 123 according to the number of first historical charging times that the target vehicle has been charged within the preset period prior to the target charging time and the number of second historical charging times that the target vehicle has been charged through the battery pack 123 within the preset period prior to the target charging time. Here, the preset period may be predefined, pre-configured, or input by an administrator. For example, the preset period may be 10 days, 30 days, etc.

The number of first historical charging times that the target vehicle has been charged within the preset times prior to the target charging time may include, but is not limited to, the number of times that a process of charging the target vehicle through the battery pack 123 has been completed, the number of times that a process of charging the target vehicle through the mains-borne control system 11 has been completed, and the number of times that a process of charging the target vehicle through both the battery pack 123 and the mains-borne control system 11 has been completed. It may be noted that a process through which charging the target vehicle has been completed may include, but is not limited to, a process through which the target vehicle is fully charged.

Optionally, the reference charging frequency at which the target vehicle has been charged through the battery pack 123 is a ratio of the number of second historical charging times, within the preset period, that charging the target vehicle through the battery pack 123 has been completed to the number of first historical charging times, within the preset period prior to the target charging time, that charging the target vehicle has been completed. For example, assuming that the number of second historical charging times, within the preset period prior to the target charging time at which the charging event occurs, that charging the target vehicle through the battery pack 123 has been completed is 5, and the number of first historical charging times, within the preset period prior to the target charging time, that charging the target vehicle has been completed is 10. The smart inverter 122 may determine that the reference charging frequency at which the target vehicle has been charged through the battery pack 123 is 0.5 according to the number of first historical charging times, 10, and the number of second historical charging times, 5.

Optionally, the smart inverter 122 may obtain the number of first historical charging times, within multiple preset periods prior to the target charging time, that charging the target vehicle has been completed, and the number of second historical charging times, within the multiple preset periods prior to the target charging time, that charging the target vehicle through the battery pack 123 has been completed. Further, for each of the multiple preset periods, the smart inverter 122 may determine an intermediate reference charging frequency at which the target vehicle has been charged through the battery pack 123 according to the number of first historical charging times corresponding to the preset period and the number of second historical charging times corresponding to the preset period. Further, the smart inverter 122 may determine the reference charging frequency at which the target vehicle has been charged through the battery pack 123 by calculating an average of multiple intermediate reference charging frequencies each corresponding to an individual one of the multiple preset periods.

At S302, the target vehicle is charged in a fast-charging mode through the mains-borne control system in the case where the reference charging frequency is determined to be less than or equal to a first preset frequency and a charging port accessed by the target vehicle is detected to be a fast-charging port.

In some possible embodiments, the target vehicle is charged in the fast-charging mode through the mains-borne control system in the case where the smart inverter 122 determines that the reference charging frequency is less than or equal to the first preset frequency and the charging port accessed by the target vehicle is detected to be a fast-charging port. Here, the first preset frequency is a frequency threshold preset for users with low sensitivity to charging costs, preset through big data analysis.

It may be noted that the first preset frequency is relatively low. In the case where the smart inverter 122 determines that the reference charging frequency is less than or equal to the first preset frequency, it indicates that the user rarely or occasionally uses the battery pack 123 in the home energy storage system 12 to charge the target vehicle, and then the smart inverter 122 may directly use the mains-borne control system 11 to charge the target vehicle. It may be understood that in the case where the target vehicle is charged through the mains-borne control system 11 and the charging port accessed by the target vehicle is a fast-charging port, it indicates that the fast-charging requirements of the target vehicle can be satisfied, and the target vehicle can be charged in the fast-charging mode. In the case where the charging port accessed by the target vehicle is a non-fast-charging port, the vehicle can be charged in the non-fast-charging mode. Meanwhile, in the case where the target vehicle is charged through the mains-borne control system 11, the user needs to pay corresponding fee according to the city electricity charging standard to complete charging.

Optionally, in the case where the smart inverter 122 determines that the reference charging frequency is less than or equal to the first preset frequency, the smart inverter 122 may send an identity discovery message to a charging cable of the target vehicle to identify cable information of the charging cable of the target vehicle. In the case where the charging cable of the target vehicle is a fast-charging cable and the charging cable of the target vehicle receives the identity discovery message, a response message may be generated and sent to the smart inverter 122. Further, in the case where the response message sent by the charging cable of the target vehicle is received by the smart inverter 122, the smart inverter 122 may determine that the charging cable is a fast-charging cable, i.e., determine that the charging port accessed by the target vehicle is a fast-charging port.

Further, the smart inverter 122 may use the mains-borne control system 11 to charge the target vehicle in the fast-charging mode in the case where the smart inverter 122 determines that the charging port accessed by the target vehicle is a fast-charging port.

At S303, a fast-charging prompt message is output via the terminal device to prompt the user to use a fast-charging port for charging in the case where it is detected that the charging port accessed by the target vehicle is a non-fast-charging port.

In some possible embodiments, the fast-charging prompt message is outputted via the terminal device 13 to prompt the user to use the fast-charging port for charging in the case where the smart inverter 122 detects that the charging port accessed by the target vehicle is a non-fast-charging port.

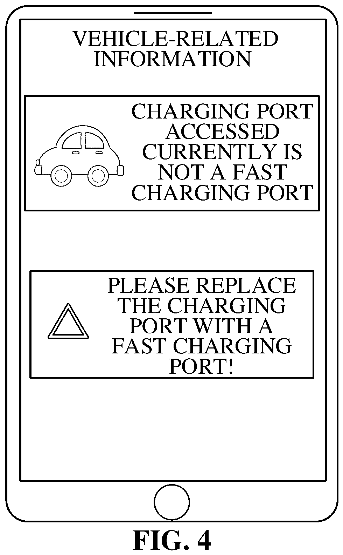

Optionally, referring to FIG. 4, FIG. 4 is a schematic diagram illustrating an interface displaying the fast-charging prompt message provided in embodiments of the disclosure. As illustrated in FIG. 4, the fast-charging prompt message may be outputted via the terminal device 13 to prompt the user to use the fast-charging port for charging in the case where the smart inverter 122 detects that the charging port accessed by the target vehicle is a non-fast-charging port. The fast-charging prompt message may be "PLEASE REPLACE THE CHARGING PORT WITH A FAST-CHARGING PORT" to prompt the user to use the fast-charging port for charging.

At S304, the target vehicle is charged in the fast-charging mode through the mains-borne control system in the case where it is detected that the charging port accessed by the target vehicle has been updated from the non-fast-charging port to the fast-charging port.

In some possible embodiments, after the smart inverter 122 outputs the fast-charging prompt message via the terminal device 13, the smart inverter 122 may re-detect whether the charging port accessed by the target vehicle is a fast-charging port. The smart inverter 122 can charge target vehicle in the fast-charging mode through the mains-borne control system 11 in the case where the smart inverter 122 detects that the charging port accessed by the target vehicle has been updated from the non-fast-charging port to the fast-charging port.

At S305, the target vehicle is charged in a non-fast-charging mode through the mains-borne control system in the case where the charging port accessed by the target vehicle is detected to remain the non-fast-charging port.

In some possible embodiments, after the smart inverter 122 outputs the fast-charging prompt message via the terminal device 13, the smart inverter 122 may re-detect whether the charging port accessed by the target vehicle is a fast-charging port. The smart inverter 122 can charge the target vehicle in the non-fast-charging mode through the mains-borne control system 11 in the case where the smart inverter 122 detects that the charging port accessed by the target vehicle remains the non-fast-charging port.

At S306, a target charging mode preferred by the user is acquired via the terminal device in the case where the reference charging frequency of the target vehicle is determined to be greater than the first preset frequency and less than or equal to a second preset frequency.

In some possible embodiments, the smart inverter 122 can acquire the target charging mode preferred by the user via the terminal device in the case where the smart inverter 122 determines that the reference charging frequency of the target vehicle is greater than the first preset frequency and less than or equal to a second preset frequency, where the second preset frequency is the frequency threshold for users with high sensitivity to charging costs, preset through big data analysis. The target charging mode is a charging control mode in which the smart inverter 122 is to charge the target vehicle.

It is noted that in the case where the reference charging frequency of the target vehicle is greater than the first preset frequency and less than or equal to the second preset frequency, it indicates that the user frequently uses the battery pack 123 of the home energy storage system 12 to charge the target vehicle, and also frequently uses the mains-borne control system 11 to charge the target vehicle. Therefore, after it is determined that the reference charging frequency of the target vehicle is greater than the first preset frequency and less than or equal to the second preset frequency, charging cost and charging duration of charging modes may be displayed to the user, to determine the target charging mode preferred by the user.

Optionally, the target charging mode may be any one of the following charging modes: a first charging mode in which the target vehicle is charged through the battery pack 123, a second charging mode in which the target vehicle is charged through the mains-borne control system 11, and a third charging mode in which the target vehicle is charged though both the battery pack 123 and the mains-borne control system 11.

In an optional embodiment, in the case where the smart inverter 122 determines that the reference charging frequency of the target vehicle is greater than the first preset frequency and less than or equal to the second preset frequency, the smart inverter 122 can display multiple selectable charging modes to the user via the terminal device 13. The multiple selectable charging modes include at least the first charging mode in which the target vehicle is charged through the battery pack 123, the second charging mode in which the target vehicle is charged through the mains-borne control system 11, and the third charging mode in which the target vehicle is charged though both the battery pack 123 and the mains-borne control system 11.

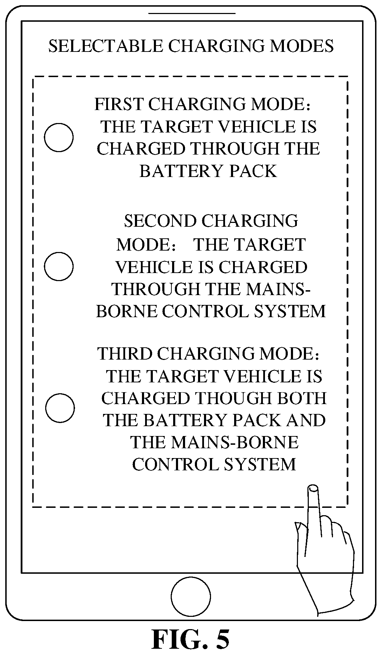

Specifically, referring to FIG. 5, FIG. 5 is a schematic diagram illustrating an interface displaying charging modes provided in embodiments of the disclosure. As illustrated in FIG. 5, the terminal device 13 may display the above three selectable charging modes to the user, allowing the user to select the preferred target charging mode.

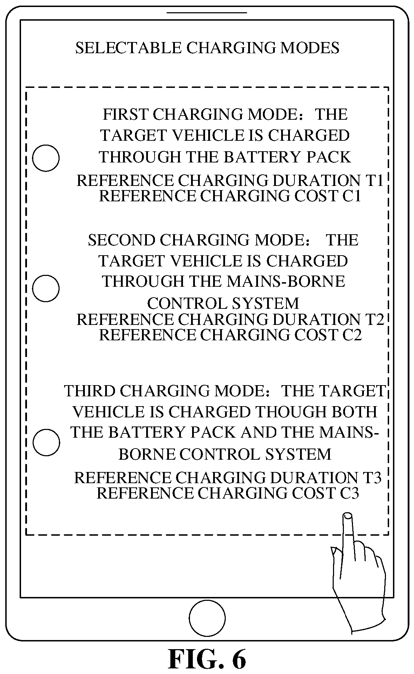

Optionally, referring to FIG. 6, FIG. 6 is another schematic diagram illustrating an interface displaying charging modes provided in embodiments of the disclosure. The smart inverter 122 may acquire a first current remaining power of the target vehicle and a second current remaining power of the battery pack 123, and determine a reference charging duration and a reference charging cost corresponding to each of the first charging mode, the second charging mode, and the third charging mode according to the first current remaining power of the target vehicle, the second current remaining power of the battery pack 123, and the electricity rates of the mains supply. As illustrated in FIG. 6, the terminal device 13 may display the three selectable charging modes to the user, along with the corresponding reference charging duration and reference charging cost for each of the three selectable charging modes, allowing the user to select the preferred target charging mode.

Furthermore, in the case where the smart inverter 122 detects a charging mode selection instruction input by the user for the multiple selectable charging modes, the smart inerter 122 can determine the target charging mode preferred by the user from the multiple selectable charging modes according to the charging mode selection instruction.

At S307, the target vehicle is charged in the target charging mode.

In some possible embodiments, after obtaining the target charging mode preferred by the user through the terminal device 13, the smart inverter 122 may charge the target vehicle in the target charging mode.

In an optional embodiment, in the case where the target charging mode is the third charging mode, the smart inverter 122 may acquire the first current remaining power of the target vehicle at the target charging time at which the charging event occurs, the second current remaining power of the battery pack at the target charging time, and multiple historical power supply amounts of the battery pack 123 within multiple historical periods corresponding to the target charging time; and predict and obtain a reference power supply amount of the battery pack within a current period in which the target charging time is located by performing statistical analysis on the multiple historical power supply amounts. Further, the smart inverter 122 may determine a target power amount of the target vehicle according to a first preset machine learning model, the first current remaining power, the second current remaining power, and the reference power supply amount. Furthermore, the smart inverter 122 may charge the target vehicle through the battery pack 123 while simultaneously monitoring whether a remaining power of the target vehicle is equal to the target power amount. In the case where the smart inverter 122 determines that the remaining power of the target vehicle reaches the target power amount, the smart inverter 122 may stop charging the target vehicle through the battery pack 123 and switch to charge the target vehicle through the mains-borne control system 11.

The first preset machine learning model may be a converged machine learning model obtained through model training using a large amount of sample data. Each of these multiple sample data may include the remaining power of the target vehicle when each charging event occurs, a remaining power of the battery pack 123 at the target charging time at which each charging event occurs, and the historical power supply amount of the battery pack 123 within a first period in which the target charging time, at which each charging event occurs, is located. Each sample data among the above multiple sample data may correspond to a target power amount of the target vehicle.

The periods may be pre-defined, pre-configured multiple periods, or multiple periods obtained by dividing, by the administrator, the 24 hours of a day according to actual conditions. The multiple historical periods corresponding to the target charging time here may include one period among the aforementioned multiple periods of each day prior to the target charging time. The second period in which the target charging time is located may be the current period, in which the charging event occurs, among the aforementioned multiple periods. For example, the 24 hours of a day may be divided into 24 periods, such as 7:00-8:00, 8:00-9:00, 9:00-10:00, etc. Alternatively, the 24 hours of a day may be divided into 12 periods, such as 7:30-9:30, 9:30-11:30, 11:30-13:30, etc. After determining the target charging time at which the charging event occurs, the multiple historical periods corresponding to the target charging time may be determined from the aforementioned multiple periods according to the target charging time. For example, if the target charging time at which the charging event occurs is 8:30, the historical period corresponding to the target charging time of 8:30 may be determined as 8:00-9:00.

Specifically, in the case where the smart inverter 122 detects the charging event corresponding to the target vehicle, the smart inverter 122 may determine the multiple historical periods corresponding to the target charging time at which the charging event occurs. Further, the smart inverter 122 may obtain multiple historical power supply amounts of the battery pack 123 within multiple historical periods within a preset number of days prior to the target charging time, and further perform statistical analysis based on the multiple historical power supply amounts generated within multiple historical periods within the preset number of days prior to the target charging time. By averaging one or more historical power supply amounts, that are greater than a preset threshold, among the aforementioned multiple historical power supply amounts, the smart inverter 122 may determine the reference power supply amount of the battery pack 123 within the current period in which the target charging time is located. It may be understood that by determining one or more historical power supply amounts, that are greater than the preset threshold, among the above multiple historical power supply amounts, the low values of the historical power supply amounts caused by special circumstances, such as being away from home, are excluded from being used as a basis for calculating the reference power supply amount, thereby preventing any adverse impact on the calculation of the reference power supply amount.

For example, the historical power supply amounts, corresponding to target periods, within the preset 10 days prior to the target charging time are supposed to be 2 kW·h, 1 kW·h, 2 kW·h, 0.5 kW·h, 1 kW·h, 1 kW·h, 2 kW·h, 0.3 kW·h, 1 kW·h, 2 kW·h. The preset threshold is supposed to be 0.8 kW·h. The smart inverter 122 may obtain 10 historical power supply amounts, corresponding to 10 historical periods that correspond to the target charging time, within the preset number of days prior to the target charging time, and perform statistical analysis on these 10 historical power supply amounts. Further, the smart inverter 122 may compare these 10 historical power supply amounts with the preset threshold and average the historical power supply amounts greater than the preset threshold. Specifically, the smart inverter 122 may average the 10 historical power supply amounts, 2 kW·h, 1 kW·h, 2 kW·h, 1 kW·h, 1 kW·h, 2 kW·h, 1 kW·h, and 2 kW·h, and determine that the reference power supply amount of the battery pack 123 within the current period corresponding to the target charging time is 1.5 kW·h.

At S308, the target vehicle is charged through the battery pack in the case where the reference charging frequency of the target vehicle is determined to be greater than the second preset frequency.

In some possible embodiments, the smart inverter 122 may charge the target vehicle through the battery pack 123 in the case where the smart inverter 122 determines that the reference charging frequency of the target vehicle is greater than the second preset frequency.

It may be noted that in the case where the reference charging frequency of the target vehicle is greater than the second preset frequency, it may indicate that the user frequently uses the battery pack 123 of the home energy storage system 12 to charge the target vehicle. Therefore, after determining that the reference charging frequency of the target vehicle is greater than the second preset frequency, the battery pack 123 can be given priority to charge the target vehicle.

In an optional embodiment, the smart inverter 122 may acquire multiple historical power supply amounts of the battery pack 123 within multiple historical periods corresponding to the target charging time at which the charging event occurs and further determine the reference power supply amount of the battery pack within the current period in which the target charging time is located by performing statistical analysis on the multiple historical power supply amounts. Furthermore, the target vehicle may be charged through the battery pack 123 in the case where the smart inverter 122 determines that the reference power supply amount within the current period is less than or equal to the preset power supply amount.

The preset power supply amount may be an empirical value. The preset power supply amount may be pre-configured or input by an administrator. The preset power supply amount is compared with the reference power supply amount within the current period, to determine whether the battery pack 123 is at a power supply peak within the current period, so that whether to charge the target vehicle through the battery pack 123 within the current period can be determined. For example, in the case where the reference power supply amount within the current period is less than or equal to the preset power supply amount, it may be determined that the battery pack 123 is not at a power supply peak within the current period, and thus the battery pack 123 may be used to charge the target vehicle within the current period. In the case where the reference power supply amount of the current period is greater than the preset power supply amount, it may be determined that the battery pack 123 is at a power supply peak within the current period, and the battery pack 123 may be used to charge the target vehicle after the current period elapses, or the battery pack 123 may be used to charge the target vehicle at a limited power within the current period.

In an optional embodiment, in the case where the smart inverter 122 determines that the reference power supply amount within the current period is greater than the preset power supply amount, the smart inverter 122 can obtain multiple historical power consumption amounts of the battery pack corresponding to multiple charging processes of the target vehicle that have been performed through the battery pack 123 prior to the target charging time,, and further can determine a reference power consumption amount for each charging process of the target vehicle that has been performed through the battery pack 123 according to the multiple historical power consumption amounts. The smart inverter 122 may obtain the second current remaining power of the battery pack 123 at the target charging time. Further, the smart inverter 122 may determine a maximum power supply amount that the battery pack 123 is capable of providing to the target vehicle within the current period, according to a second preset machine learning model, the reference power consumption amount, the reference power supply amount, and the second current remaining power. The maximum power supply amount may be the maximum amount of power that the battery pack 123 is capable of providing to the target vehicle within the current period. Further, the smart inverter 122 may determine the target power that the battery pack is capable of charging the target vehicle within the current period according to the reference power supply amount and the maximum charging duration, and use the battery pack 123 to charge the target vehicle at the target power.

The second preset machine learning model may be a converged machine learning model obtained through model training with a large number of sample data. Each of these multiple sample data may include the power consumption amount of the battery pack 123 for charging the target vehicle during each of multiple power supply processes for the target vehicle, a historical reference power supply amount of the battery pack 123 within the first period in which the target charging time, at which each charging event occurs, is located, and the remaining power of the battery pack 123 at the target charging time at which each charging event occurs. Each of these multiple sample data may correspond to the maximum amount of power that the battery pack 123 can provide to the target vehicle.

For example, taking a target vehicle with a battery capacity of 30 kW·h as an example, the historical power consumption amounts of the battery pack 123 for charging the target vehicle during 10 charging processes prior to the target charging time are supposed to be 25 kW·h, 20 kW·h, 24 kW·h, 22 kW·h, 18 kW·h, 20 kW·h, 24 kW·h, 16 kW·h, 20 kW·h, 22 kW·h. The reference power supply amount within the current period is supposed to be 2 kW·h. The second current remaining power of the battery pack 123 is supposed to be 20 kW·h. The target charging time is 5:30, and the current period corresponding to the target charging time is supposed to be 5:00-6:00. The smart inverter 122 may average the historical power consumption amounts for charging the target vehicle during 10 charging processes prior to the target charging time, to determine that the reference power consumption amount for each charging process in which the target vehicle has been charged through the battery pack 123 is 21.1 kW·h. Further, the smart inverter 122 may determine the maximum power supply amount that the battery pack 123 is capable of providing to the target vehicle within the current period is 10 kW·h, according to the second preset machine learning model, the reference average power consumption amount of 21.1 kW·h, the reference power supply amount of 2 kW·h, and the second current remaining power of 20 kW·h. Further, the smart inverter 122 may determine that the maximum charging duration of the target vehicle within the target period is 0.5 hours according to the target charging time of 5:30 and the current period of 5:00-6:00. The smart inverter 122 may determine that the reference power supply amount that the battery pack 123 is capable of providing to the target vehicle within the maximum charging duration is 5 kW·h according to the maximum power supply amount of 10 kW·h and the maximum charging duration of 0.5 hours. Further, the smart inverter 122 may determine the target power that the battery pack 123 is capable of providing to the target vehicle is 10 kW according to the reference power supply amount of 5 kW·h and the maximum charging duration of 0.5 hours, and charge the target vehicle through the battery pack 123 at the target power of 10 kW.

In another optional embodiment, the smart inverter 122 may determine the end time of the current period according to the current period in the case where the smart inverter 122 determines that the reference power supply amount within the current period is greater than the preset power supply amount. Further, the smart inverter may use the battery pack 123 to charge the target vehicle in the case where the smart inverter 122 determines that the end time of the current period has arrived.

For example, assume here that the current period is 5:30-6:30. The smart inverter 122 may determine that the end time of the current period is 6:30 according to the current period of 5:30-6:30 in the case where the smart inverter 122 determines that the reference power supply amount within the current period is greater than the preset power supply amount. Further, the smart inverter 122 may use the battery pack 123 to charge the target vehicle in the case where the smart inverter 122 determines that the end time of 6:30 of the current period has arrived.

Optionally, in the case where the smart inverter 122 determines that the reference power supply amount within the current period is greater than the preset power supply amount, the smart inverter may determine the end time of the current period according to the current period and may send a first prompt message to the user via the terminal device 13 to prompt the user not to charge the target vehicle during the current period in which the target charging time is located. In the case where the smart inverter 122 determines that the end time of the current period has arrived, the smart inverter may send a second prompt message to the user via the terminal device 13 to prompt the user to start charging the target vehicle through the battery pack 123, and may start charging the target vehicle through the battery pack 123.

In the embodiments of the disclosure, the smart inverter 122 in the home energy management system 10 may determine a magnitude relationship between the reference charging frequency, at which the target vehicle has been charged through the battery pack 123, and the first preset frequency, and a magnitude relationship between the reference charging frequency and the second preset frequency, to determine a charging control strategy for charging of the target vehicle. Further, the smart inverter may charge the target vehicle through the battery pack and/or mains-borne control system, improving the intelligence and comprehensiveness of charging control of new energy vehicles by the home energy management system, expanding the boundaries of energy management functions, and allowing for flexible charging of new energy vehicles.

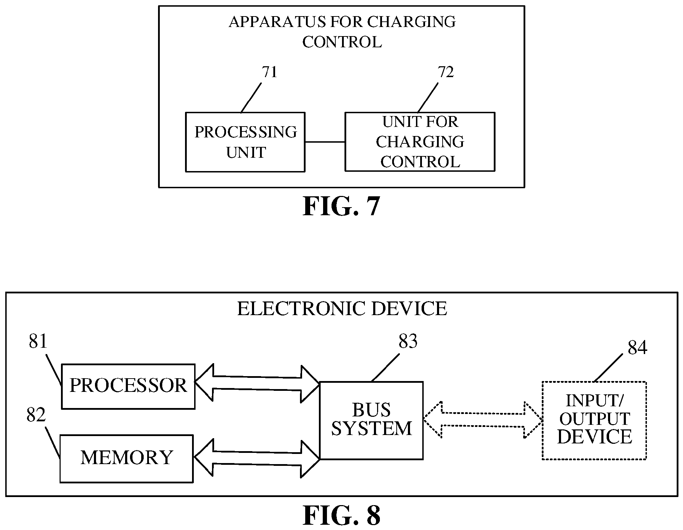

Referring to FIG. 7, FIG. 7 is a schematic structural diagram of an apparatus for charging control provided in embodiments of the disclosure. As illustrated in FIG. 7, the apparatus for charging control includes a processing unit 71 and a unit for charging control 72.

Specifically, the processing unit 71 is configured to acquire a reference charging frequency at which a target vehicle has been charged through a battery pack in the case where a charging event corresponding to the target vehicle is detected, where the reference charging frequency indicates a frequency at which the target vehicle has been charged through the battery pack prior to the charging event. The unit for charging control 72 is configured to charge the target vehicle in a fast-charging mode through the mains-borne control system in the case where the processing unit 71 determines that the reference charging frequency is less than or equal to a first preset frequency and detects that a charging port accessed by the target vehicle is a fast-charging port of the target vehicle, where the first preset frequency is a frequency threshold for users with low sensitivity to charging costs, preset through big data analysis. The processing unit 71 is further configured to output a fast-charging prompt message via the terminal device to prompt a user to use the fast-charging port for charging in the case where the charging port accessed by the target vehicle is detected to be a non-fast-charging port. The unit for charging control 72 is further configured to charge the target vehicle in the fast-charging mode through the mains-borne control system in the case where the processing unit 71 detects that the charging port accessed by the target vehicle has been updated from the non-fast-charging port to the fast-charging port. The unit for charging control 72 is further configured to charge the target vehicle in a non-fast-charging mode through the mains-borne control system in the case where the processing unit 71 detects that the charging port accessed by the target vehicle remains the non-fast-charging port. The processing unit 71 is further configured to acquire via the terminal device a target charging mode preferred by the user in the case where the reference charging frequency of the target vehicle is determined to be greater than the first preset frequency and less than or equal to a second preset frequency, where the second preset frequency is a frequency threshold for users with high sensitivity to charging costs, preset through big data analysis. The unit for charging control 72 is further configured to charge the target vehicle in the target charging mode. The unit for charging control 72 is further configured to charge the target vehicle through the battery pack in the case where the processing unit 71 determines the reference charging frequency of the target vehicle is greater than the second preset frequency.

In an optional embodiment, the processing unit 71 is further configured to display multiple selectable charging modes to the user via the terminal device, where the multiple selectable charging modes include at least a first charging mode in which the target vehicle is charged through the battery pack, a second charging mode in which the target vehicle is charged through the mains-borne control system, and a third charging mode in which the target vehicle is charged though both the battery pack and the mains-borne control system. The processing unit 71 is further configured to determine the target charging mode preferred by the user from the multiple selectable charging modes according to the charging mode selection instruction, in the case where a charging mode selection instruction input by the user for the multiple selectable charging modes is detected.

In an optional embodiment, the processing unit 71 is further configured to acquire a first current remaining power of the target vehicle at a target charging time at which the charging event occurs, a second current remaining power of the battery pack at the target charging time, and multiple historical power supply amounts of the battery pack within multiple historical periods corresponding to the target charging time. The processing unit 71 is further configured to predict and obtain a reference power supply amount of the battery pack within a current period in which the target charging time is located by performing statistical analysis on the multiple historical power supply amounts. The processing unit 71 is further configured to determine a target power amount of the target vehicle according to a first preset machine learning model, the first current remaining power, the second current remaining power, and the reference power supply amount. The unit for charging control 72 is further configured to charge the target vehicle through the battery pack. The unit for charging control 72 is further configured to charge the target vehicle through the mains-borne control system in the case where the processing unit 71 determines that a remaining power of the target vehicle reaches the target power amount.

In an optional embodiment, the processing unit 71 is further configured to acquire multiple historical power supply amounts of the battery pack within multiple historical periods corresponding to a target charging time at which the charging event occurs. The processing unit 71 is further configured to determine a reference power supply amount of the battery pack within a current period in which the target charging time is located by performing statistical analysis on the multiple historical power supply amounts. The unit for charging control 72 is further configured to charge the target vehicle through the battery pack in the case where the processing unit 71 determines that the reference power supply amount within the current period is less than or equal to a preset power supply amount.

In an optional embodiment, the processing unit 71 is further configured to acquire multiple historical power consumption amounts of the battery pack corresponding to multiple charging processes of the target vehicle that have been performed through the battery pack prior to the target charging time in the case where the reference power supply amount within the current period is determined to be greater than the preset power supply amount. The processing unit 71 is further configured to determine, according to the multiple historical power consumption amounts, a reference power consumption amount for each charging process of the target vehicle that has been performed through the battery pack. The processing unit 71 is further configured to acquire a second current remaining power of the battery pack at the target charging time. The processing unit 71 is further configured to determine a maximum power supply amount that the battery pack is capable of providing to the target vehicle within the current period, according to a second preset machine learning model, the reference power consumption amount, the reference power supply amount, and the second current remaining power. The processing unit 71 is further configured to determine a target power for charging the target vehicle through the battery pack, according to the maximum power supply amount, the target charging time, and the current period. The unit for charging control 72 is further configured to charge the target vehicle through the battery pack at the target power.

In an optional embodiment, the processing unit 71 is further configured to determine an end time of the current period according to the current period in the case where the reference power supply amount within the current period is determined to be greater than the preset power supply amount. The unit for charging control 72 is further configured to charge the target vehicle through the battery pack in the case where the processing unit 71 determines that the end time of the current period has arrived.

In an optional embodiment, the processing unit 71 is further configured to acquire the number of first historical charging times that the target vehicle has been charged within a preset period prior to the target charging time, and the number of second historical charging times that the target vehicle has been charged through the battery pack within the preset period. The processing unit 71 is further configured to determine the reference charging frequency at which the target vehicle has been charged through the battery pack according to the number of first historical charging times and the number of second historical charging times.

Referring to FIG. 8, FIG. 8 is a schematic structural diagram of an electronic device provided in embodiments of the disclosure. The electronic device may be the terminal device in the above embodiments. The electronic device may be configured to perform steps of the method for charging control executed by the terminal device as described in the above embodiments. The electronic device may include a processor 81, a memory 82, and a bus system 83.

The memory 82 includes, but is not limited to, a random access memory (RAM), a read-only memory (ROM), an erasable programmable read-only memory (EPROM), or a compact disc read-only memory (CD-ROM). The memory 82 is used to store relevant instructions and data. The memory 82 stores an operating instruction, an operating system, executable modules or data structures, or subsets thereof, or extended sets thereof.

The operating instruction may include various operating instructions to implement various operations.

The operating system may include various system programs for implementing various basic services and processing hardware-based tasks.

FIG. 8 only illustrates one memory. The memory may also be implemented as multiple memories as needed.

As illustrated in FIG. 8, the electronic device may also include input/output (I/O) apparatus 84, which may be a communication module or transceiver circuit. In the embodiments of the disclosure, an input/output (I/O) apparatus 84 is configured to perform the process of receiving and transmitting data or signaling during the interaction between the smart inverter 122 and the terminal device 13 involved in the embodiments.

The processor 81 may be a controller, a central processing unit (CPU), a general-purpose processor, a digital signal processor (DSP), an application specific integrated circuit (ASIC), a field programmable gate array (FPGA), other programmable logic devices, transistor logic devices, hardware components, or any combination thereof. Various exemplary logical blocks, modules, and circuits described in conjunction with the embodiments of the disclosure may be achieved or implemented. The processor 81 also may be a combination realizing computing functions, for example, a combination of one or more microprocessors, a combination of the DSP and the microprocessor, or the like.

It is noted that, in practice, the processor in the embodiments of the disclosure may be an integrated circuit chip with signal processing capabilities. During implementation, each step of the foregoing method may be completed by an integrated logic circuit in the form of hardware or an instruction in the form of software in the processor. The processor may be a general-purpose processor, a DSP, an ASIC, a FPGA or other programmable logic devices, discrete gates or transistor logic devices, or discrete hardware components. The processor can implement or execute the methods, steps, and logic blocks disclosed in the embodiments of the disclosure.

Referring to FIG. 8, the electronic device may also be the smart inverter 122 described in the above embodiments, which may be configured to implement the steps of the method for charging control executed by the smart inverter 122 as described in the aforementioned embodiments.

It may be noted that, in practice, the processor in the embodiments of the disclosure may be an integrated circuit chip with signal processing capabilities. During implementation, each step of the foregoing method may be completed by an integrated logic circuit of hardware in the processor or an instruction in the form of software. The processor may be a general-purpose processor, a DSP, an ASIC, a FPGA, or other programmable logic devices, discrete gates or transistor logic devices, discrete hardware components. The methods, steps, and logic blocks disclosed in the embodiments of the disclosure can be implemented or executed.

It can be understood that, the memory in the embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or a flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). The memory described in the embodiments of the disclosure is intended to include, but is not limited to, these and any other suitable types of memory.

The embodiments of the disclosure further provides a computer-readable storage medium storing a computer program which, when executed by a computer, causes the computer to implement the method or steps executed by the smart inverter in the embodiments of the disclosure.

The embodiments of the disclosure further provides a computer program product, when executed by a computer, causes the computer to implement the method or steps executed by the smart inverter in the above embodiments.

It may be noted that, for the sake of simplicity, any of the foregoing embodiments of the method for charging control are described as a series of action combinations. However, it will be appreciated by those skilled in the art that the disclosure is not limited by the sequence of actions described. According to the disclosure, some steps may be performed in other orders or simultaneously. Besides, it will be appreciated by those skilled in the art that the embodiments described in the specification are exemplary embodiments, and the actions involved are not necessarily essential to the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps is not limited to the listed steps, on the contrary, it can optionally include other steps that are not listed; alternatively, other steps inherent to the process, method, product, or device can be included either.

The term "embodiment" or "implementation" referred to herein means that a particular feature, structure, or feature described in conjunction with the embodiments may be contained in at least one embodiment of the disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

Although the disclosure has been described in conjunction with various embodiments, those of ordinary skill in the art may understand and implement other variations of the disclosed embodiments by reviewing the accompany drawings, the disclosed content, and the appended claims during the practice of the disclosure to be protected. In the claims, the term "comprising" does not exclude the presence of other components or steps, and "a" or "an" does not exclude the possibility of a plurality. The fact that certain measures are recited in mutually different dependent claims does not indicate that these measures cannot be combined to achieve a beneficial effect.

Those of ordinary skill in the art may understand that all or part of the steps in any of the aforementioned embodiments of the method for charging control may be executed by instructing relevant hardware through a program, which can be stored in a computer-readable memory. The memory may include a flash drive, an ROM, an RAM, a magnetic disk, an optical disk, and the like.

The above embodiments in the disclosure are described in detail. Principles and implementation manners of the method for charging control, the apparatus for charging control, and the related devices of the disclosure are elaborated with specific implementations herein. The illustration of embodiments above is only used to help understanding of methods and core ideas of the disclosure. At the same time, for those of ordinary skill in the art, according to ideas of the method for charging control, the apparatus for charging control, and the related devices of the disclosure, there will be changes in the specific implementation manners and application scopes. In summary, contents of this specification should not be understood as limitation on the disclosure.

Those of ordinary skill in the art may recognize that, in one or more of the above examples, the functions described in the disclosure can be implemented in hardware, software, firmware, or any combination thereof. When implemented in software, these functions can be stored on a computer-readable medium or transmitted as one or more instructions or codes on a computer-readable medium. The computer-readable medium includes both storage media and communication media, where the communication media includes any medium that facilitates the transfer of a computer program from one place to another. The storage media may be any available medium that can be accessed by a general-purpose or special-purpose computer.

The specific embodiments described above further illustrate the objectives, technical solutions, and beneficial effects of the disclosure in detail. It may be understood that the above descriptions are merely specific embodiments of the disclosure and are not intended to limit the scope of protection of the disclosure. Any modifications, equivalent replacements, improvements, and the like made based on the technical solutions of the disclosure should all be included within the scope of protection of the disclosure.

## Claims

1. A method for charging control, applied to a smart inverter in a home energy management system, wherein the home energy management system comprises a mains-borne control system, a home energy storage system, and a terminal device, wherein the home energy storage system comprises a photovoltaic panel array, the smart inverter, and a battery pack, wherein the smart inverter is connected to the photovoltaic panel array, the battery pack, the mains-borne control system, and the terminal device, wherein the method comprises:
acquiring a reference charging frequency at which a target vehicle has been charged through the battery pack in the case where a charging event corresponding to the target vehicle is detected, wherein the reference charging frequency indicates a frequency at which the target vehicle has been charged through the battery pack prior to the charging event;
charging the target vehicle in a fast-charging mode through the mains-borne control system in the case where the reference charging frequency is determined to be less than or equal to a first preset frequency and a charging port accessed by the target vehicle is detected to be a fast-charging port, wherein the first preset frequency is a frequency threshold for users with low sensitivity to charging costs, preset through big data analysis;
outputting a fast-charging prompt message via the terminal device to prompt a user to use the fast-charging port for charging in the case where it is detected that the charging port accessed by the target vehicle is a non-fast-charging port;
charging the target vehicle in the fast-charging mode through the mains-borne control system in the case where it is detected that the charging port accessed by the target vehicle has been updated from the non-fast-charging port to the fast-charging port;
charging the target vehicle in a non-fast-charging mode through the mains-borne control system in the case where the charging port accessed by the target vehicle is detected to remain the non-fast-charging port;
acquiring via the terminal device a target charging mode preferred by the user in the case where the reference charging frequency of the target vehicle is determined to be greater than the first preset frequency and less than or equal to a second preset frequency, wherein the second preset frequency is a frequency threshold for users with high sensitivity to charging costs, preset through big data analysis;
charging the target vehicle in the target charging mode; and
charging the target vehicle through the battery pack in the case where the reference charging frequency of the target vehicle is determined to be greater than the second preset frequency.

2. The method of claim 1, wherein acquiring via the terminal device the target charging mode preferred by the user comprises:
displaying a plurality of selectable charging modes to the user via the terminal device, wherein the plurality of selectable charging modes comprise at least a first charging mode in which the target vehicle is charged through the battery pack, a second charging mode in which the target vehicle is charged through the mains-borne control system, and a third charging mode in which the target vehicle is charged though both the battery pack and the mains-borne control system; and
in the case where a charging mode selection instruction input by the user for the plurality of selectable charging modes is detected, determining the target charging mode preferred by the user from the plurality of selectable charging modes according to the charging mode selection instruction.

3. The method of claim 2, wherein the target charging mode is the third charging mode, and charging the target vehicle in the target charging mode comprises:
acquiring a first current remaining power of the target vehicle at a target charging time at which the charging event occurs, a second current remaining power of the battery pack at the target charging time, and a plurality of historical power supply amounts of the battery pack within a plurality of historical periods corresponding to the target charging time;
predicting and obtaining a reference power supply amount of the battery pack within a current period in which the target charging time is located by performing statistical analysis on the plurality of historical power supply amounts;
determining a target power amount of the target vehicle according to a first preset machine learning model, the first current remaining power, the second current remaining power, and the reference power supply amount;
charging the target vehicle through the battery pack; and
charging the target vehicle through the mains-borne control system in the case where a remaining power of the target vehicle is determined to reach the target power amount.

4. The method of claim 1, wherein charging the target vehicle through the battery pack comprises:
acquiring a plurality of historical power supply amounts of the battery pack within a plurality of historical periods corresponding to a target charging time at which the charging event occurs;
determining a reference power supply amount of the battery pack within a current period in which the target charging time is located by performing statistical analysis on the plurality of historical power supply amounts; and
charging the target vehicle through the battery pack in the case where the reference power supply amount within the current period is determined to be less than or equal to a preset power supply amount.

5. The method of claim 4, further comprising:
acquiring a plurality of historical power consumption amounts of the battery pack corresponding to a plurality of charging processes of the target vehicle that have been performed through the battery pack prior to the target charging time in the case where the reference power supply amount within the current period is determined to be greater than the preset power supply amount;
determining, according to the plurality of historical power consumption amounts, a reference power consumption amount for each charging process of the target vehicle that has been performed through the battery pack;
acquiring a second current remaining power of the battery pack at the target charging time;
determining a maximum power supply amount that the battery pack is capable of providing to the target vehicle within the current period, according to a second preset machine learning model, the reference power consumption amount, the reference power supply amount, and the second current remaining power;
determining a target power for charging the target vehicle through the battery pack, according to the maximum power supply amount, the target charging time, and the current period; and
charging the target vehicle through the battery pack at the target power.

6. The method of claim 4, further comprising:
determining an end time of the current period according to the current period in the case where the reference power supply amount within the current period is determined to be greater than the preset power supply amount; and
charging the target vehicle through the battery pack in the case where it is determined that the end time of the current period has arrived.

7. The method of any one of claims 3 to 6, wherein acquiring the reference charging frequency at which the target vehicle has been charged through the battery pack comprises:
acquiring a number of first historical charging times that the target vehicle has been charged within a preset period prior to the target charging time, and a number of second historical charging times that the target vehicle has been charged through the battery pack within the preset period; and
determining the reference charging frequency at which the target vehicle has been charged through the battery pack according to the number of first historical charging times and the number of second historical charging times.

8. An apparatus for charging control, comprising:
a processing unit configured to acquire a reference charging frequency at which a target vehicle has been charged through a battery pack in the case where a charging event corresponding to the target vehicle is detected, wherein the reference charging frequency indicates a frequency at which the target vehicle has been charged through the battery pack prior to the charging event;
a unit for charging control configured to charge the target vehicle in a fast-charging mode through a mains-borne control system in the case where the reference charging frequency is determined to be less than or equal to a first preset frequency and a charging port accessed by the target vehicle is detected to be a fast-charging port of the target vehicle, wherein the first preset frequency is a frequency threshold for users with low sensitivity to charging costs, preset through big data analysis;
the processing unit further configured to output a fast-charging prompt message via a terminal device to prompt a user to use the fast-charging port for charging in the case where the charging port accessed by the target vehicle is detected to be a non-fast-charging port;
the unit for charging control further configured to charge the target vehicle in the fast-charging mode through the mains-borne control system in the case where it is detected that the charging port accessed by the target vehicle has been updated from the non-fast-charging port to the fast-charging port;
the unit for charging control further configured to charge the target vehicle in a non-fast-charging mode through the mains-borne control system in the case where the charging port accessed by the target vehicle is detected to remain the non-fast-charging port;
the processing unit further configured to acquire via the terminal device a target charging mode preferred by the user in the case where the reference charging frequency of the target vehicle is determined to be greater than the first preset frequency and less than or equal to a second preset frequency, wherein the second preset frequency is a frequency threshold for users with high sensitivity to charging costs, preset through big data analysis;
the unit for charging control further configured to charge the target vehicle in the target charging mode; and
the unit for charging control further configured to charge the target vehicle through the battery pack in the case where the reference charging frequency of the target vehicle is determined to be greater than the second preset frequency.

9. A computer-readable storage medium storing a computer program which, when executed by a processor, causes the processor to execute operations of the method of any one of claims 1 to 7.

10. An electronic device comprising a memory and a processor, wherein the memory stores a computer program which, when executed by the processor, causes the processor to execute operations of the method of any one of claims 1 to 7.
